# EUROPEAN PATENT SPECIFICATION

(11) **EP 3 753 751 B1**
(45) Date of publication and mention of the grant of the patent: **10.01.2024**
(21) Application number: 20180145.3
(22) Date of filing: 16.06.2020
(51) Int. Cl.: B60C 9/00, D02G 3/48

(54) **A HYBRID CORD REINFORCEMENT FOR A TIRE AND A TIRE COMPRISING A HYBRID CORD REINFORCEMENT**
HYBRIDKORDVERSTÄRKUNG FÜR EINEN REIFEN UND REIFEN MIT EINER HYBRIDKORDVERSTÄRKUNG
RENFORT DE CÂBLES HYBRIDES POUR PNEU ET PNEU COMPRENANT UN TEL RENFORT DE CÂBLES HYBRIDES

(30) Priority: 17.06.2019 US 201962862185 P
(43) Date of publication of application: 23.12.2020
(73) Proprietor: The Goodyear Tire & Rubber Company, Akron, OH 44316 (US)
(72) Inventor: MERSCH, Romain Jack Rodolphe, 57570 Boust (FR)
(74) Representative: Kutsch, Bernd

(56) References cited:
- EP-A1- 2 065 222
- EP-A1- 3 050 719
- DE-A1-102008 037 615
- US-A1- 2009 090 447
- US-A1- 2017 274 706

## Description

### Field of the invention

The present invention is directed to a cord, in particular a hybrid cord for a tire ply or ply strip, in particular for an overlay structure. Moreover, the present invention is directed to a tire comprising such a cord or component.

### Background

While tire performance has significantly improved over the past decades, the demands of the users increased as well, especially in the field of race tires. In particular, increasing requirements in the Ultra Ultra High Performance (UUHP) segment are showing the limits of current overlay reinforcing materials which cover ply belts of the tire. Increasing demands are for instance found in high speed performance, durability and handling. Preferable cords which may help to achieve acceptable properties, in particular in overlay plies or ply strips are for instance known from US2004/0118499 A1 and United States Patent 6,799,618 which disclose a pneumatic tire having an overlay strip comprising hybrid cords consisting of two aramid yarns and a Nylon yarn twisted together to form a cord. The twist direction of the cord is opposite to the twist directions of the single yarns. While such solutions have helped to increase performance of race tires in the past, significant room for improvement remains.

EP 3050719 A1 discloses a radial tire comprising a belt overlay with at least two twisted yarns, wherein one yarn is a high modulus yarn and a second yarn is a low modulus yarn. In an example, two high modulus yarns are twisted together and are then both twisted with a low modulus yarn to form a cord.

DE 102008037615 A1 discloses a hybrid cord for use in a belt overlay and consisting of two twisted yarns, wherein one of the yarns is an aramid yarn and the second yarn is a polyamide yarn.

EP 2065222 A1 disclose a radial tire comprising a belt reinforcement layer comprising a hybrid fiber cord. The cord comprises a low-elastic fiber yarn made of nylon and a highly-elastic fiber yarn with an elastic modulus of at least 10000 MPa.

US 2009/0090447 A1 discloses tire cord reinforcements with one or more aramid yarns (preferably a single aramid yarn) having a linear density of 220 dtex to 3300 dtex and being twisted in a first direction, in combination with a nylon yarn having a linear density of 220 dtex to 2100 dtex and being twisted in the same direction as the aramid yarn, wherein the aramid yarn and the nylon yarn are twisted together in an opposite direction to form a cable.

US 2017/0274706 A1 discloses a hybrid cord for use as reinforcement in a belt bandage of a pneumatic tire. In particular, this document discloses a construction of aramid 1680 x2 + nylon 700 x1. In a preferred embodiment, each of the yarns is twisted with 300 turns per meter in a first twist direction and the cord is twisted in an opposite twist direction also with 300 turns per meter.

### Summary of the invention

A first object of the invention may be to provide a cord for use in a reinforced tire ply or strip which supports improvements in one or more of the following properties: high speed, ride and handling or durability of the tire.

Another object of the invention may be to provide an improved tire overlay textile reinforcement.

Another object of the invention may be to provide an improved textile reinforced tire, in particular for race or passenger car tires.

The present invention is defined by the independent claim 1. Further optional and advantageous embodiments are given in the dependent claims as well as in the summary and description hereinbelow.

In one aspect of the invention, a hybrid (textile) cord for a tire ply or ply strip is provided, the cord comprising two aramid yarns and a polyamide yarn. Each aramid yarn has a density from 1400 to 1900 dtex and is twisted in a first direction with 5 to 11, preferably 8, twists per 0.0254 m (tpi). The polyamide yarn has a density of 750 to 1200 dtex twisted in the first direction with 4 to 10, preferably 7, twists per 0.0254 m, wherein the three yarns are twisted together to form the cord, and wherein the cord is twisted with 4 to 10 twists per 0.0254 m in a direction opposite to the first direction. The number of twists per 0.0254 m of each aramid yarn has at least 10% twists per 0.0254 m more than the polyamide yarn. Furthermore, the number of twists per 0.0254 m of the polyamide yarn and the number of twists per 0.0254 m of the cord (15) does not differ from each other in more than 0.5 twists per 0.0254 m.

It has been found by the inventors that such a construction offers a high modulus, strength and elongation of the cord. In particular, such a construction has been found to be advantageous over constructions having a central core yarn (e.g. Nylon) and a wrap or wraps of aramid yarn. In the invention, all yarns are twisted in the same direction (e.g. Z or S) and then cabled in the opposite direction (e.g. S, or Z respectively). Also, initial modulus is high as the aramid and polyamide yarns are twisted together. Moreover, the claimed combination of the twist multipliers of the aramid and nylon yarns has been found to be advantageous.

Moreover, the construction has shown improved consistency in tensile measurement as such a construction is compact and stable over the different processing steps.

Preferably, the cord comprises exactly said three yarns.

In an embodiment, the two aramid yarns have each a density of 1500 to 1800 dtex, or optionally from 1600 to 1700 dtex, in order to improve the total cord modulus. The polyamide yarn may also have a density of 800 to 1100 dtex, and optionally of 900 to 1000 dtex, for instance, in order to allow additional elongation before breaking the cord during stretching, and/or while allowing a small cord diameter which may reduce the total rubber thickness required to fully cover the cord. Such a range has turned out to be of particular advantage by the inventors.

In another embodiment, the number of twists per 0.0254 m of the aramid yarn has between 10 % to 25 % twists per 0.0254 m more than the polyamide yarn. This feature has turned out to be of particular interest for the performance. In particular, the aramid twist level compared to the polyamide allows to further increase the elongation at break of the cord (which is increasing the impact resistance) and its fatigue resistance (which is also beneficial for long term durability of the tire).

In accordance with the invention, the number of twists per 0.0254 m of the polyamide yarn and the number of twists per 0.0254 m of the cord do not differ from each other in more than 0.5 twists per 0.0254 m, for instance in order to improve the cord stability and compactness.

In still another embodiment, the aramid yarns are (each) twisted with 7 to 9 twists per 0.0254 m and/or the polyamide yarn is twisted with 6 to 8 twists per 0.0254 m. The cord may be twisted with 6 to 8 twists per 0.0254 m.

In still another embodiment, the aramid yarns are (each) twisted with 5 to 9, preferably 7 to 8.5 or 7 to 8, twists per 0.0254 m and/or the polyamide yarn is twisted with 4 to 8, preferably 6 to 7.5 or 6 to 7, twists per 0.0254 m. The cord may be twisted with 6 to 8 twists per 0.0254 m.

In yet another embodiment, the polyamide is nylon-6,6, nylon-4,6. nylon-6,9, nylon-6,10, nylon 6.12, nylon-6, nylon-11 or nylon12. In another embodiment, the cord has a construction of 1670/2 dtex aramid + 940/1 dtex Nylon, twisted 8Z/7Z/7S twists per 0.0254 m (tpi). In other words, 2 yarns or strands of aramid having each a weight of 1670 dtex are each twisted with 8 tpi in Z direction. A 940 dtex Nylon is twisted with 7 tpi also in Z direction. Finally, the three yarns are twisted with 7 tpi in the opposite S direction to form the cord out of the three yarns. This configuration has turned out to provide most promising properties in terms of high speed durability / stiffness. Radial tire growth under high speed conditions (e.g. > 240 km/h), in particular for large rim diameter tires over 18 inch (with 1 inch being equal to 0.0254 m), is much lower with the new cord, which helps to reduce the deformations and heat generation in the tire crown area. The increased stiffness of the cord is also providing improvements in tire cornering and reactivity.

In another aspect of the invention, a tire is provided which comprises one or more of said hybrid cords.

The pneumatic tire may comprise at least one or more of a belt ply, a carcass ply, an overlay ply and an overlay ply strip, wherein the ply or ply strip of the tire comprises a plurality of cords comprising three yarns twisted together, consisting of two aramid yarns having each a density from 1400 to 1900 dtex being each twisted in a first direction with 5 to 11, preferably 8, twists per 0.0254 m, a polyamide yarn having a density of 750 to 1200 dtex twisted in the first direction with 4 to 10 twists per 0.0254 m, and wherein the three yarns form a cord twisted with 4 to 10, preferably 7, twists per 0.0254 m in the direction opposite to the first direction. The tire has the advantages already stated above in relation to the benefits of the cords.

It is emphasized that not all of the stated tire components (i.e. plies or ply strips) need to comprise the cords in accordance with the invention. It is possible that only one of said components comprises cords of the present invention. Moreover, in accordance with this invention the ply or ply strip does not necessarily comprise merely cords and may also comprise cords according to the invention and other cords. However, in an embodiment all cords or at least 40% or 50% of the cords in a ply or ply strip are cords in accordance with the invention.

In another embodiment, the pneumatic tire comprises a carcass with at least one carcass ply, a tread disposed radially outward of a crown region of the carcass, a belt with a plurality of belt plies arranged between the carcass ply and the tread, wherein the plurality of belt plies is covered by an overlay (structure) comprising a helically wound elastomeric strip, reinforced by a plurality of the cords and extending (transversely) over the belt plies at an angle of between 0 and 5 degrees (optionally between 0 and 2 degrees) with the equatorial plane (EP) of the tire.

In still another embodiment, said strip has a width (w) in the range of from 3 mm to 15 mm and/or a thickness (t) in the range of from 0.8 mm to 3 mm (preferably 2 mm) and/or a fabric or cord density of between 15 to 30 ends per 0.0254 m (epi), in particular measured along the width (w) direction of the strip.

In still another embodiment, the tire is a radial race tire or a radial passenger car tire.

All aspects, embodiments and features thereof may be combined with one another.

### Brief description of the drawings

The structure, operation and advantages of the invention will become more apparent upon contemplation of the following description taken in conjunction with the accompanying drawings, wherein:
Figure 1 represents a schematic perspective cross-section of a tire in accordance with an embodiment of the invention.
Figure 2 represents a schematic cross-section of a ply strip, e.g. an overlay ply strip, comprising schematically displayed hybrid cords in accordance with the invention; and
Figure 3 represents a schematic cross section of a hybrid cord for a tire ply or ply strip in accordance with an embodiment of the invention.

### Detailed description of the embodiments

The cords of this invention include two aramid yarns and one polyamide yarn. The aramid yarns may be comprised of (preferably long-chain) aromatic polyamides in which typically at least 85% of the amide linkages (-CO-NH-) therein are attached directly to two aromatic rings. Poly(p-phenyleneterephtalamide) is a representative example of such an aramid that can be utilized in accordance with this invention. Aramid which is suitable for use in the practice of this invention is commercially available from DuPont under the tradename Nomex^{®}, Kevlar^{®} 29, Kevlar^{®} 49, Kevlar^{®} 119, Kevlar^{®} 129, and Kevlar^{®} 149. Aramid which is suitable for use in the practice of this invention is commercially available from Teijin under the tradename Twaron^{®}.

The polyamide (non-aromatic) that can be used in the practice of this invention can be prepared by reacting a dibasic acid with a diamine, such as nylon-6,6 (synthesized by reacting hexamethylene diamine with adipic acid), nylon-6,9 (synthesized by reacting hexamethylene diamine with azelaic acid), nylon-6,10 (synthesized by reacting hexamethylene diamine with sebacic acid), nylon-6,12 (synthesized by reacting hexamethylene diamine with dodecanedioic acid), or nylon-4,6 (synthesized by reacting 1,4-diaminobutane with adipic acid). In the alternative, the polyamide that can be used in the practice of this invention can be prepared by the polymerization of an amino acid or an amine acid derivative, such as nylon-6 (made by the polymerization of ε-caprolactam), nylon-11 (made by the polymerization of undecanoic acid), or nylon-12 (made by the polymerization of laurolactam).

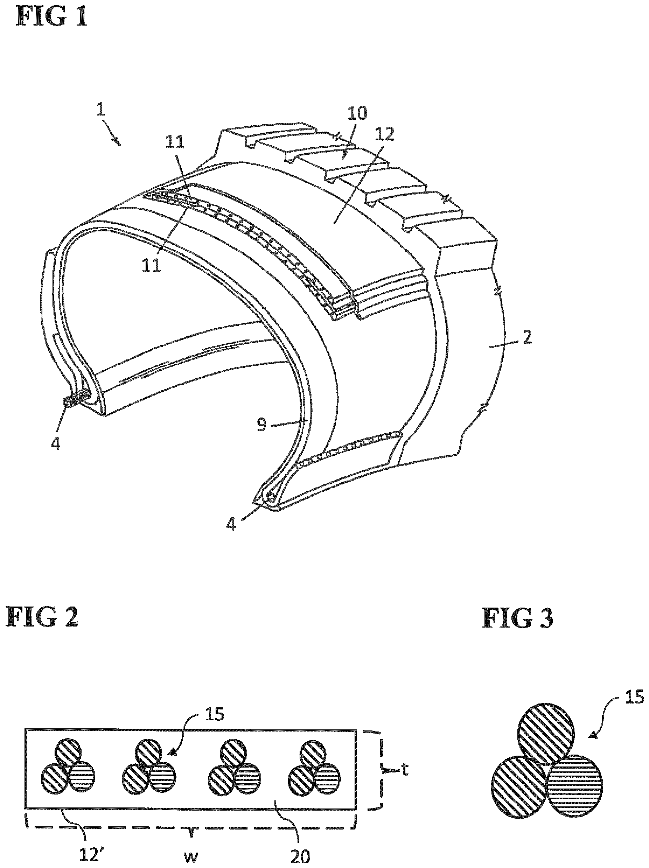

Figure 1 is a schematic perspective cross-section of a tire 1. The tire 1 has a tread 10, a belt structure comprising two belt plies 11, a carcass ply 9, two sidewalls 2, and two bead regions comprising beads 4. The example tire 1 is suitable, for example, for mounting on a rim of a vehicle, e.g. a race or a passenger car. As shown in Figure 1, the belt plies 11 may be covered by an overlay ply 12. The overlay ply 12 is shown here as a single ply covering the belt plies 11 of the tire 1. However, the overlay ply 12 or overlay (ply) structure may also consist of a helically wound ply strip such as strip 12' schematically shown in Figure 2, or multiple of such strips. In other words, the ply strip 12' may be wound essentially in a circumferential direction, for instance with an angle of between 0 and 5 degree with the equatorial plane of the tire, covering the radially outermost belt ply 11 radially below the tread 10. The carcass ply 9 of Figure 1 includes a pair of axially opposite end portions, each of which is associated with a respective one of the beads 4. Each axial end portion of the carcass ply 9 may be turned up and around the respective bead 4 to a position to anchor each axial end portion 6. One or more of the carcass ply 9, belt plies 11 and overlay ply 12 or ply strip(s) 12' comprise a rubber composition (such compositions are known in the art and are not in the focus of the present invention) and have a plurality of substantially parallel reinforcing members, or in other words textile cords, in accordance with an example of the invention. As shown in Figure 1, the example tread 10 may have five circumferential grooves, each groove essentially defining a U-shaped opening in the tread 10. The main portion of the tread 10 may be formed of one or more tread compounds, which may be any suitable tread compound or compounds.

While the embodiment of Figure 1 suggests a plurality of tire components, not all of such components are mandatory for the invention. Also, the turned-up end of the carcass ply 9 is not necessary for the invention or may pass on the opposite side of the bead area 3 and terminate on the axially inner side of the bead 4 instead of the axially outer side of the bead 4. The tire could also have, for instance, more or less than four grooves or even no grooves, as for example in some slick tires. Moreover, the number of belts could be for instance 1, 2, 3, 4 or 5 or even more belt plies 11. Race tires may for example have from 1 to 4 belt plies 11.

The schematic cross-section of Figure 2 shows a ply strip 12', e.g. an overlay ply strip 12' which comprises a plurality of hybrid cords 15 reinforcing the rubber composition material 20. Typically, such a ply strip may be made in a fabric calender or extrusion unit in which a plurality of essentially parallel textile cords (or in other words warp cords) are coated from both sides with a layer or sheet of rubber composition 20. Optionally, such parallel cords 15 may be connected by a thin yarn or fiber, which may also be called weft. Where needed or desired, plies are cut into multiple parallel (overlay) strips. Such methods are well known to the person skilled in the art of tire building. After curing, the cords 15 are embedded in the rubber composition 20, reinforcing the same.

In general, cords 15 may be coated with dips and/or adhesives (or may be free of such materials) for better adhesion properties with regards to adhesion of the cords 15 to the rubber composition or matrix 20. Neither a dip nor an adhesive coating is shown in Figure 2.

While the schematic drawing of Figure 2 indicates four hybrid cords 15 according to the invention, the number of parallel cords per ply strip could be different, for instance between 2 and 10. A preferred ends per 0.0254 m (epi) value could be between 10 and 40 epi, even more preferably between 15 and 30 epi, as for instance 20 or 24 epi. With a same or similar epi-value, the cord 15 could also be embedded in other plies such as but not limited to those shown in Figure 1. The width w of the ply strip 12' may be for instance in general between 3 and 20 mm (preferably 16 mm), preferably between 4 and 11 mm. The thickness t could be for instance in the range of from 0.7 mm to 1.7 mm. In general, the width w of the strip 12' (essentially in parallel to the axial direction of the tire) is larger than the thickness t of the strip 12' (essentially in the radial direction of the tire). The cords 15 extend in parallel to the length of the strip 12' (perpendicular to the width w and thickness t directions).

Figure 3 discloses a schematic cross section of a hybrid cord 15 comprising two aramid yarns (same hatching) and a polyamide yarn (different hatching). As apparent from the drawing, the cord 15 does not have a core or central yarn and no yarns wrapped around such a central core. In contrast, the three yarns are twisted about each other to form the cord 15 within the scope of the present invention. Each of the three yarns shown in Figure 3 is twisted itself in accordance with the embodiments of the invention. However, the twist of each yarn cannot be shown in the cross section of Figure 3.

The hybrid cords of this invention can be beneficially incorporated into tire overlay plies to enhance tire performance characteristics. Such an overlay ply is typically interposed between the radially outermost ply of the belt assembly and the tread and comprises one or more wraps having a width which is about equal to that of the widest of the belt plies. Alternatively, the overlay ply can consist of two separate axially spaced apart ply portions either disposed radially outwardly of the belt assembly such as to cover the edges of the radially outermost belt ply or interposed between the belt plies such as to extend between the edges thereof. Another possibility of assembling an overlay ply consists in interposing a helically wound cord or single yarn, which has been coated with elastomeric material, between the radially outermost ply of the belt assembly and the tread. As winding a single cord is time consuming, it has been proposed to assemble the overlay ply from a 5 to 30 mm wide, helically wound strip, made from cord reinforced elastomeric material, located radially outwardly to the belt plies.

Although the overlay structure can be comprised of only one layer, it can also be comprise a second layer located adjacent to and radially outside of the first layer. Preferably, the second layer should have its helical convolutions wound with the opposite hand to the first layer so that the cords of each layer cross at a very small angle. With such a construction the two layers can be wound continuously in succession without a break in the strip. It is to be understood that the helical convolutions of the helically wound strip, in place of being in abutment with any adjacent convolution, can also have an overlapping relationship with the previous convolutions, which overlap can be constant or variable across the width of the belt reinforcing structure without departing from the instant invention. Such overlay structures and their use in tires is described in United States Patent 6,799,618.

Each of the yarns in a cord has its component filaments twisted together a given number of turns or twists per unit of length of the yarn (usually expressed in turns or twists per 0.0254 m or "TPI" or "tpi") and additionally the yarns are twisted together a given number of turns per unit of length of the cord. The direction of twist refers to the direction of slope of the spirals of a yarn or cord when it is held vertically. If the slope of the spirals conforms in direction to the slope of the letter "S", then the twist is called "S" or "left hand". If the slope of the spirals conforms in direction to the slope of the letter "Z", then the twist is called "Z" or "right hand". An "S" or "left hand" twist direction is understood to be an opposite direction from a "Z" or "right hand" twist. "Yarn twist" is understood to mean the twist imparted to a yarn before the yarn is incorporated into a cord, and "cord twist" is understood to mean the twist imparted to two or more yarns when they are twisted together with one another to form a cord. The term "dtex" means the weight in grams of 10,000 meters of a yarn before the yarn has a twist imparted thereto.

For instance, the cord may have a construction of 1670/2 dtex aramid + 940/1 dtex Nylon, twisted 8Z/7Z/7S twists per 0.0254 m (tpi). In other words, 2 yarns or strands of aramid having each a weight of 1670 dtex are each twisted with 8 tpi in Z direction. A 940 dtex Nylon is twisted with 7 tpi also in Z direction. Finally, the three yarns are twisted with 7 tpi in the opposite S direction to form the cord out of the three yarns.

In any case, the cords can have a construction wherein two aramid yarns are twisted 5, 6, 7, or 8 tpi in the Z direction, wherein the polyamide yarn is twisted with 4, 5, 6, or 7 turns in the Z direction, and wherein the three yarns are twisted together 4, 5, 6, 7, 8, 9 or 10 turns in the S direction. The aramid yarns in these cords have a linear density which is within the range of 1400 dtex to 1900 dtex, which is frequently within the range of 1500 dtex to 1800 dtex, which is preferably within the range of 1600 dtex to 1700 dtex, and which is most preferably within the range of 1650 dtex to 1690 dtex. The aramid yarns in these cords have a linear density which is within the range of 750 dtex to 1200 dtex, which is frequently within the range of 800 dtex to 1100 dtex, which is preferably within the range of 900 dtex to 1000 dtex, and which is most preferably within the range of 920 dtex to 960 dtex.

Some specific cord constructions which are contemplated include the following: 1670/2 dtex aramid + 940/1 dtex polyamide, twisted 8Z/7Z/7S twists per 0.0254 m; 1670/2 dtex aramid + 940/1 dtex polyamide, twisted 7Z/6Z/6S twists per 0.0254 m; 1670/2 dtex aramid + 940/1 dtex polyamide, twisted 8Z/6Z/6S twists per 0.0254 m; 1670/2 dtex aramid + 940/1 dtex polyamide, twisted 6Z/5Z/5S twists per 0.0254 m; 1670/2 dtex aramid + 940/1 dtex polyamide, twisted 7Z/5Z/5S twists per 0.0254 m; 1670/2 dtex aramid + 940/1 dtex polyamide, twisted 8Z/5Z/5S twists per 0.0254 m; 1670/2 dtex aramid + 940/1 dtex polyamide, twisted 5Z/4Z/4S twists per 0.0254 m; 1670/2 dtex aramid + 940/1 dtex polyamide, twisted 6Z/4Z/4S twists per 0.0254 m; 1670/2 dtex aramid + 940/1 dtex polyamide, twisted 7Z/4Z/4S twists per 0.0254 m; 1670/2 dtex aramid + 940/1 dtex polyamide, twisted 8Z/4Z/4S twists per 0.0254 m; These and the above cord constructions may also be combined with the embodiments mentioned in the summary of the invention.

Variations in the present invention are possible in light of the provided description. While certain representative embodiments, examples and details have been shown for the purpose of illustrating the subject invention, it will be apparent to those skilled in this art that various changes and modifications can be made therein without departing from the scope of the invention. It is, therefore, to be understood that changes may be made in the particular example embodiments described which will be within scope of the invention as defined by the following appended claims.

In any case the above described embodiments and examples shall not be understood in a limiting sense. In particular, the features of the above embodiments may also be combined with one another

## Claims

1. A hybrid cord for a tire ply or ply strip (9, 11, 12), the cord (15) comprising:
two aramid yarns, each aramid yarn having a density from 1400 dtex to 1900 dtex and being twisted in a first direction with 5 to 11 twists per 0.0254 m,
a polyamide yarn having a density of 750 dtex to 1200 dtex and being twisted in the first direction with 4 to 10 twists per 0.0254 m,
wherein the three yarns are twisted together with 4 to 10 twists per 0.0254 m in a direction opposite to the first direction to form the cord (15);
wherein the number of twists per 0.0254 m of each aramid yarn has at least 10% twists per 0.0254 m more than the polyamide yarn, and
wherein the number of twists per 0.0254 m of the polyamide yarn and the number of twists per 0.0254 m of the cord (15) does not differ from each other in more than 0.5 twists per 0.0254 m.

2. The hybrid cord according to claim 1, wherein the cord (15) comprises exactly three yarns.

3. The hybrid cord according to claim 1 or 2, wherein each aramid yarn has a density of 1500 to 1800 dtex, preferably of 1600 to 1700 dtex.

4. The hybrid cord according to one or more of the preceding claims, wherein the polyamide yarn has a density of 800 to 1100 dtex, preferably of 900 to 1000 dtex.

5. The hybrid cord according to one or more of the preceding claims, wherein the number of twists per 0.0254 m of each aramid yarn is larger than the number of twists per 0.0254 m of the polyamide yarn and wherein the number of twists per 0.0254 m of the polyamide yarn and of the cord (15) is the same.

6. The hybrid cord according to one or more of the preceding claims, wherein the number of twists per 0.0254 m of each aramid yarn has between 10% to 25% twists per 0.0254 m more than the polyamide yarn.

7. The hybrid cord according to one or more of the preceding claims, wherein each aramid yarn is twisted with 5 to 9, preferably with 7 to 8, twists per 0.0254 m, and/or wherein the polyamide yarn is twisted with 4 to 8, preferably with 6 to 7 twists per 0.0254 m.

8. The hybrid cord according to one or more of the preceding claims, wherein the cord is twisted with 6 to 8 twists per 0.0254 m.

9. The hybrid cord according to one or more of the preceding claims, wherein the polyamide is nylon 6.6.

10. The hybrid cord according to one or more of the preceding claims, wherein the cord (15) has a construction 1670/2 dtex aramid + 940/1 dtex Nylon, twisted with 8Z/7Z/7S twists per 0.0254 m.

11. A pneumatic tire (1) comprising at least one of the following components:
a belt ply (11), a carcass ply (9), an overlay ply (12) and an overlay ply strip (12');
wherein at least one of the components (9, 11, 12, 12') comprised in the tire (1) has a plurality of cords (15) according to one or more of the preceding claims, and wherein the pneumatic tire (1) is optionally a radial race tire or a radial passenger car tire.

12. The pneumatic tire of claim 11 comprising a carcass with at least one carcass ply (9), a tread (10) disposed radially outward of a crown region of the carcass, a belt with a plurality of belt plies (11) arranged between the carcass ply (9) and the tread (10), wherein the plurality of belt plies (11) is covered by an overlay structure comprising a helically wound overlay ply strip (12'), reinforced by a plurality of the cords (15) and extending over the belt plies (11) at an angle of between 0 and 5 degrees with the equatorial plane of the tire (1).

13. The pneumatic tire of claim 11 or 12, comprising an overlay ply strip (12'), wherein said strip (12') has one or more of: a width (w) in the range of 4 mm to 18 mm, a thickness (t) in the range of 0.7 mm to 1.7 mm and a fabric density of from 10 to 40 ends per 0.0254 m.

## Patentansprüche

1. Hybridkord für eine Reifenlage oder einen Lagenstreifen (9, 11, 12), wobei der Kord (15) umfasst:
zwei Aramidgarne, wobei jedes Aramidgarn eine Dichte von 1400 dtex bis 1900 dtex aufweist, und in einer ersten Richtung mit 5 bis 11 Verdrehungen pro 0,0254 m verdreht ist,
ein Polyamidgarn, das eine Dichte von 750 dtex bis 1200 dtex hat, und in der ersten Richtung mit 4 bis 10 Verdrehungen pro 0,0254 m verdreht ist,
wobei die drei Garne mit 4 bis 10 Verdrehungen pro 0,0254 m in einer Richtung entgegengesetzt zur ersten Richtung zusammen verdreht sind, um den Kord (15) zu bilden;
wobei die Anzahl der Verdrehungen pro 0,0254 m jedes Aramidgarns mindestens 10 % mehr Verdrehungen pro 0,0254 m hat als das Polyamidgarn; und
wobei die Anzahl der Verdrehungen pro 0,0254 m des Polyamidgarns und die Anzahl der Verdrehungen pro 0,0254 m des Kordes (15) um nicht mehr als 0,5 Verdrehungen pro 0,0254 m voneinander abweichen.

2. Hybridkord nach Anspruch 1, wobei der Kord (15) genau drei Garne umfasst.

3. Hybridkord nach Anspruch 1 oder 2, wobei jedes Aramidgarn eine Dichte von 1500 bis 1800 dtex, vorzugsweise von 1600 bis 1700 dtex hat.

4. Hybridkord nach einem oder mehreren der vorhergehenden Ansprüche, wobei das Polyamidgarn eine Dichte von 800 bis 1100 dtex, vorzugsweise von 900 bis 1000 dtex hat.

5. Hybridkord nach einem oder mehreren der vorhergehenden Ansprüche, wobei die Anzahl der Verdrehungen pro 0,0254 m jedes Aramidgarns größer ist als die Anzahl der Verdrehungen pro 0,0254 m des Polyamidgarns, und wobei die Anzahl der Verdrehungen pro 0,0254 m des Polyamidgarns und des Kords (15) gleich ist.

6. Hybridkord nach einem oder mehreren der vorhergehenden Ansprüche, wobei die Anzahl der Verdrehungen pro 0,0254 m jedes Aramidgarns zwischen 10 % und 25 % mehr Verdrehungen pro 0,0254 m hat als das Polyamidgarn.

7. Hybridkord nach einem oder mehreren der vorhergehenden Ansprüche, wobei jedes Aramidgarn mit 5 bis 9, vorzugsweise mit 7 bis 8, Verdrehungen pro 0,0254 m verdreht ist, und/oder wobei das Polyamidgarn mit 4 bis 8, vorzugsweise mit 6 bis 7, Verdrehungen pro 0,0254 m verdreht ist.

8. Hybridkord nach einem oder mehreren der vorhergehenden Ansprüche, wobei der Kord mit 6 bis 8 Verdrehungen pro 0,0254 m verdreht ist.

9. Hybridkord nach einem oder mehreren der vorhergehenden Ansprüche, wobei das Polyamid Nylon 6.6 ist.

10. Hybridkord nach einem oder mehreren der vorhergehenden Ansprüche, wobei der Kord (15) eine Konstruktion aus 1670/2 dtex Aramid + 940/1 dtex Nylon hat, die mit 8Z/7Z/7S Verdrehungen pro 0,0254 m verdreht ist.

11. Luftreifen (1), der mindestens eines der folgenden Komponente umfasst:
eine Gürtellage (11), eine Karkassenlage (9), einen Nylongürtel (12) und einen Nylongürtelstreifen (12');
wobei mindestens eines der Komponente (9, 11, 12, 12'), die der Reifen (1) umfasst, eine Vielzahl von Korden (15) nach einem oder mehreren der vorhergehenden Ansprüche hat, und wobei der Luftreifen (1) optional ein radialer Rennreifen oder ein radialer Pkw-Reifen ist.

12. Luftreifen nach Anspruch 11, der eine Karkasse umfasst, die eine Karkassenlage (9), eine radial außerhalb eines Kronenbereichs der Karkasse angeordnete Lauffläche (10), einen eine Vielzahl von zwischen der Karkassenlage (9) und der Lauffläche (10) angeordnete Gürtellagen (11) umfassende Gürtel, umfasst, wobei die Vielzahl von Gürtellagen (11) von einer Überlagerungsstruktur bedeckt ist, die einen schraubenförmig gewickelten Überlagerungslagenstreifen (12') umfasst, der durch eine Vielzahl von Korden (15) verstärkt ist und die sich über die Gürtellagen (11) unter einem Winkel zwischen 0 und 5 Grad mit der Äquatorialebene des Reifens (1) erstreckt.

13. Luftreifen nach Anspruch 11 oder 12, der einen Überlagerungslagenstreifen (12') umfasst, wobei der Streifen (12') eines oder mehrere der folgenden Merkmale aufweist: eine Breite (w) in dem Bereich von 4 mm bis 18 mm, eine Dicke (t) in dem Bereich von 0,7 mm bis 1,7 mm und eine Gewebedichte von 10 bis 40 Enden pro 0,0254 m.

## Revendications

1. Câblé hybride pour nappe ou une une bande de nappe de bandage pneumatique (9, 11, 12) qui comprend :
deux fils d'aramide, chaque fil d'aramide possédant une densité de 1.400 dtex à 1.900 dtex et étant soumis à une torsion dans une première direction avec de 5 à 11 torsions par 0,0254 m ;
un fil de polyaramide possédant une densité de 750 dtex à 1.200 dtex et étant soumis à une torsion dans la première direction avec de 4 à 10 torsions par 0,0254 m ;
dans lequel les trois fils sont soumis à une torsion conjointe avec de 4 à 10 torsions par 0,0254 m dans une direction qui est opposée à la première direction afin d'obtenir le câblé (15) ;
dans lequel le nombre de torsions par 0,0254 m de chaque fil d'aramide possèdent un nombre de torsions supérieur à raison d'au moins 10 % de torsions par 0,0254 m par rapport à celui du fil de polyamide ; et
dans lequel le nombre de torsions par 0,0254 m du fil de polyaramide et le nombre de torsions par 0,0254 m du câblé (15) ne diffèrent l'un de l'autre de plus de 0,5 torsion par 0,0254 m.

2. Câblé hybride selon la revendication 1, dans lequel le câblé (15) comprend exactement trois fils.

3. Câblé hybride selon la revendication 1 ou 2, dans lequel chaque fil d'aramide possède une densité de 1.500 dtex à 1.800 dtex, de préférence de 1.600 dtex à 1.700 dtex.

4. Câblé hybride selon une ou plusieurs des revendications précédentes, dans lequel le fil de polyamide possède une densité de 800 dtex à 1.100 dtex, de préférence de 900 dtex à 1.000 dtex.

5. Câblé hybride selon une ou plusieurs des revendications précédentes, dans lequel le nombre de torsions par 0,0254 m de chaque fil d'aramide est supérieur au nombre de torsions par 0,0254 m du fil de polyamide ; et dans lequel nombre de torsions par 0,0254 m du fil de polyamide et du câblé (15) est identique.

6. Câblé hybride selon une ou plusieurs des revendications précédentes, dans lequel le nombre de torsions par 0,0254 m de chaque fil d'aramide est supérieur entre 10 % et 25 % de torsions par 0,0254 m par rapport à celui du fil de polyamide.

7. Câblé hybride selon une ou plusieurs des revendications précédentes, dans lequel chaque fil d'aramide est soumis à des torsions avec de 5 à 9, de préférence avec 7 à 8 torsions par 0,0254 m et/ou dans lequel le fil d'aramide est soumis à des torsions avec de 4 à 8, de préférence avec 6 à 7 torsions par 0,0254 m.

8. Câblé hybride selon une ou plusieurs des revendications précédentes, dans lequel le câblé est soumis à des torsions avec de 5 à 8 torsions par 0,0254 m.

9. Câblé hybride selon une ou plusieurs des revendications précédentes, dans lequel le polyamide est du nylon 6.6.

10. Câblé hybride selon une ou plusieurs des revendications précédentes, dans lequel le câblé (15) possède une construction 1670/2 dtex d'aramide + 940/1 dtex de nylon, torsadés avec des torsions 8Z/7Z/7S par 0,0254 m.

11. Bandage pneumatique (1) qui comprend au moins un des composants indiqués ci-après :
une nappe de ceinture (11), une nappe de carcasse (9), une nappe de protection (12) et une bande de nappe de protection (12 ') ;
dans lequel au moins un des composants (9, 11, 12, 12') compris dans le bandage pneumatique (1) possède un certain nombre de câblés (15) en conformité avec une ou plusieurs des revendications précédentes; dans lequel le bandage pneumatique (1) représente de manière facultative un bandage pneumatique de course à nappe radiale ou un bandage pneumatique pour véhicule de tourisme à nappe radiale.

12. Bandage pneumatique selon la revendication 11, qui comprend une carcasse qui comprend au moins une nappe de carcasse (9), une bande de roulement (10) qui est disposée à l'extérieur, dans la direction radiale, d'une zone de sommet de la carcasse, une ceinture qui comprend un certain nombre de nappes de ceinture (11) disposées entre la nappe de carcasse (9) et la bande de roulement (10) ; dans lequel lesdites plusieurs nappes de ceinture (11) sont recouvertes d'une structure de protection qui comprend une bande de nappe de protection (12') enroulée de manière hélicoïdale, qui est renforcée avec un certain nombre des câblés (15) et qui s'étend par-dessus les nappes de ceinture (11) en formant un angle entre 0 et 5 degrés avec le plan équatorial du bandage pneumatique (1).

13. Bandage pneumatique selon la revendication 11 ou 12, qui comprend une bande de nappe de protection (12') ; dans lequel ladite bande (12') possède un ou plusieurs des caractéristiques indiquées ci-après, à savoir : une largeur (w) dans la plage de 4 mm à 18 mm, une épaisseur (t) dans la plage de 0,7 mm à 1,7 mm, et une densité de tissu de 10 à 40 bouts par 0,0254 m.
